# NEW EUROPEAN PATENT SPECIFICATION

(11) **EP 0 319 523 B2**
(45) Date of publication and mention of the opposition decision: **25.10.1995**
(45) Mention of the grant of the patent: 10.03.1993
(21) Application number: 89101862.4
(22) Date of filing: 15.01.1986
(51) Int. Cl.: A01J 7/00, A01K 1/12

(54) **Device for automatically milking an animal**
Gerät zum automatischen Melken von Tieren
Dispositif de traîte automatique d'animaux

(30) Priority: 16.01.1985 NL 8500088
(43) Date of publication of application: 07.06.1989
(62) Divisional of application: 86200063.5
(73) Proprietor: C. van der Lely N.V., NL-3155 PD Maasland (NL)
(72) Inventor: Van der Lely, Ary, Maasland (NL); Bom, Cornelis Johannes Gerardus, Rozenburg (NL)
(74) Representative: Mulder, Herman

(56) References cited:
- EP-A- 0 091 892
- DE-A- 95 953
- GB-A- 2 007 486
- NL-A- 67 020
- SU-A- 337 102
- SU-A- 341 265
- SU-A- 342 384
- US-A- 2 512 926
- US-A- 3 033 161
- US-A- 3 870 021
- US-A- 4 010 714
- US-A- 4 022 158
- DE TELEGRAAF 04 December 1984, page T23 E.BOS: "LAND- EN TUINBOUW"
- LANDTECHNIK. vol. 35, no. 5, May 1980, HANNOVER DE pages 222 - 224; D.ORDOLFF: "MELKZEUGE AUTOMATISCH ANSETZEN - DEMNÄCHST WIRKLICHKEIT ?"

## Description

The invention relates to a device for automatically milking an animal such as a cow, comprising guide means positioned near the animal, detection means for determining the position of the animal or the position of specific parts of the animal, such as the udder of the animal, a robot with a holder for carrying a teat cup and attaching said teat cup to the udder of the animal, and a milking machine, whereby the robot is activated by the same pneumatic means as used in the milking machine for milking.

Such a device comprises a milking parlour where the animal is stationed during milking. The milking parlour must be such, that the animal feels comfortable there. The animal can be fed in the milking parlour with concentrated fodder, the fodder being fed depending on the specific animal. To that end the animal is provided with identifying means to establish which animal is present. The guide means may be in the form of a rail system around or on both sides of the animal.

During automatic milking of the animal, which may be done without a farmer or any other supervision being present, it is of importance that the milking cluster is applied in the correct manner. When the milking parlour has a lateral boundary which is contiguous to the animal, it may be assumed that the udder is substantially in the centre between the lateral guide means of the milking parlour. If, additionally, it is known how much space there is between the udder and the posterior of the relevant animal, an arm supporting the milking cluster can be moved between the legs of the animal from the rear forwardly until a stop provided on that arm touches the posterior of the animal, whereafter the milking cluster is attached by an upward movement of the arm. For each animal the distance between the milking cluster and the stop provided on the arm must be adjusted to the correct lenth. It will be obvious that the lateral guide means of the milking parlour must allow adequate room for each animal, so that a number of animals which are narrower than the distance between the guide means cannot be accurately stationed in the centre of the milking parlour. This can however be somewhat corrected in that the milking cluster moves between the hind legs of the animal, as a result of which the animal will tend to move to the centre.

Since for the purpose of milking there is a vacuum available, it is advantageous to use this vacuum as an energy source for setting the component parts of the robot into motion.

A device as described in the opening paragraph is known from GB-A-2 007 486. In that patent specification the holder at the end of the last robot arm is appropriate to carry only a single teat cup, as a consequence of which the teat cups must be taken and attached to the respective teats separately, one after another.

As will be explained hereafter a more flexible device will be obtained if, according to the invention, the device as characterized in that the holder is appropriate to carry a milking cluster provided with a plurality of teat cups and in that the robot comprises means for moving the milking cluster holder in a somewhat downward direction, after the milking cluster has been attached and the pneumatic means has produced the vacuum in the teat cups and for holding the milking cluster holder during milking in a position below the teats, the milking cluster holder furthermore being provided with recesses through which somewhat flexible tubes, by means of which the teat cups are connected to the milking machine, pass in such a way that after milking, when the vacuum in the teat cups is terminated, the teat cups fall back into the recesses in the milking cluster holder.

So as to increase the possibility for the milking cluster to follow the movements of the animal, the milking cluster may be capable of disconnection relative to the means for applying that milking cluster. Then the milking cluster is supported in a milking cluster holder connected to the supporting arm, from which holder the teat cups can freely move upwardly. Thus it is possible, after the milking cluster has been attached and the milking machine has produced the vacuum in the teat cups, that the milking cluster holder be moved in a somewhat downward direction, whereby the teat cups being kept on the teats, such as is customary for a normal milking cluster. The somewhat flexible tubes by means of which the teat cups are connected to the milking machine, pass the teat cup holder through recesses. This ensures the movability of the teat cups because of the fact that the tubes are adequately flexible, whilst on the other hand it is ensured that after milking, when the vacuum in the teat cups is terminated, the cups fall back into the recesses in the milk cup holder.

The milking cluster can be supported by an arm, by means of which it can first be positioned in a substantially vertical plane on the basis of the information provided by the identifying means and the detection means, whereafter a substantially vertical displacement of the milking cluster results in attachment to the teats. Thus, the milking cluster, after the position of the animal and hence of the udder has been accurately determined, is moved effectively to the correct position. In this situation the arm can extend somewhat rearwardly to under the animal, whereby access for the supporting arm is not restricted by a hind leg being in a more advanced position and which moreover corresponds more to the position of a young animal sucking its mother, so that the animal will experience it as a more natural situation. In this respect it should be noted that for the milk production it is important that the animal feels comfortable and is not annoyed by uncomfortable situations.

Furthermore the supporting arm may be swivable in a fixed frame around a substantially vertical shaft, the supporting arm being furthermore capable of moving in its longitudinal direction relative to the frame and the end of the supporting arm carrying the milking cluster. Because of this swivability and movability, the supporting arm can convey the milking cluster to any desired position. Furthermore, the milking cluster is adjustable in height by a swivel motion of the supporting arm around a substantially horizontal axis. Acting thus, the milking cluster can be efficiently attached to the udder.

After the milking cluster has been attached to the udder and during milking, it may be important that the animal has the possibility to move to some degree, for example by slightly moving its hind legs. The milking cluster, after having been attached to the udder, can be freely movable in a substantially horizontal plane, so that any movement of the animal is easy.

Furthermore the milking device may include cleaning means for cleaning the teats and/or the milking cluster. Cleaning may be done using lukewarm water, a solution of disinfectants, or any other desired liquid or spray. The cleaning means may have a spraying device for releasing a cleaning liquid during a short period of time. This spraying device can spray the cleaning liquid towards the udder.

To ensure that the milking cluster is kept clean, means may be present to place the milking cluster, when it is not connected to the teats, in a substantially upside down position, that is to say the open ends of the teat cups face down. In this position the spraying device can spray a cleaning liquid against the teat cups, whereafter superfluous liquid can leak from the cups.

The position and the place of each individual teat cup of the milking cluster may be adjustable depending on the position of the teats of a specific animal. This position may however alter, depending on a number of factors or depending on the age of the animal. To obviate this means are provided which, during the milking operations, record the position of the teat cups and store them as data, with the object of using these data during a subsequent milking operation of the same animal in such a way that before the milking cluster is placed on the udder, the position of the teat cups is adjusted in accordance with the previously recorded position during milking of the same animal. Thus, also gradual changes in the position of the teats can be observed, whereafter the adjustment of the milking cluster for the relevant animal can be adapted thereto.

In a computer, which controls the means for positioning the milking cluster, a plurality of data of the animal to be milked may be stored. This data may contain the configuration (relative location and/or position) of the teats, the position of the teats relative to a reference point, preferably one of the teats, the horizontal distance between the rear of the animal and a reference point near the udder, and/or the distance between a different detection point and a reference point, and the horizontally measured distance between the side of the animal and a reference point at the udder. In the computer the control signals for the means for positioning the milking cluster can be derived from these data.

Additionally, the computer can store the time elapsed between milking operations of the same animal. Such an information may be important in connection with the quantity of fodder the animals is fed during milking, but also in connection with the expected quantity of milk and the degree to which the udder is filled. This last item may affect the position and the location of the teats, so that these data can be taken into account in the determination of the actions to be performed for attaching the milking cluster.

By way of further illustration of the invention some embodiments of the automatic milking device will be described with reference to the accompanying drawing.
Figure 1 is a schematic plan view of the device;
Figure 2 is a side view of the milking device shown in Figure 1;
Figure 3 illustrates the milking cluster with support;
Figure 4 is a plan view of a second embodiment of the milking device;
Figure 5 is a side view of the milking device as shown in Figure 4;
Figure 6 is a schematic view of a third embodiment of the milking device;
Figure 7 is a side view of the milking device of Figure 6.

In these Figures corresponding components are given the same reference numerals.

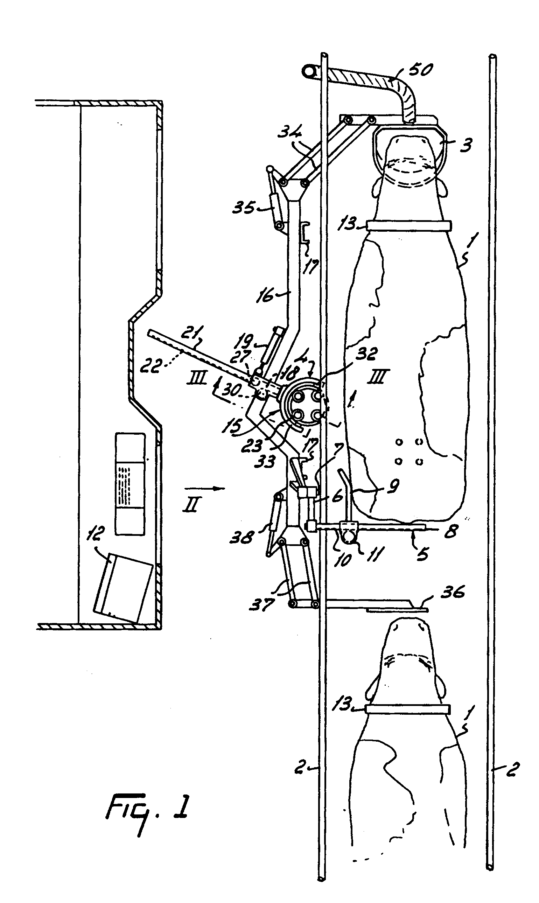

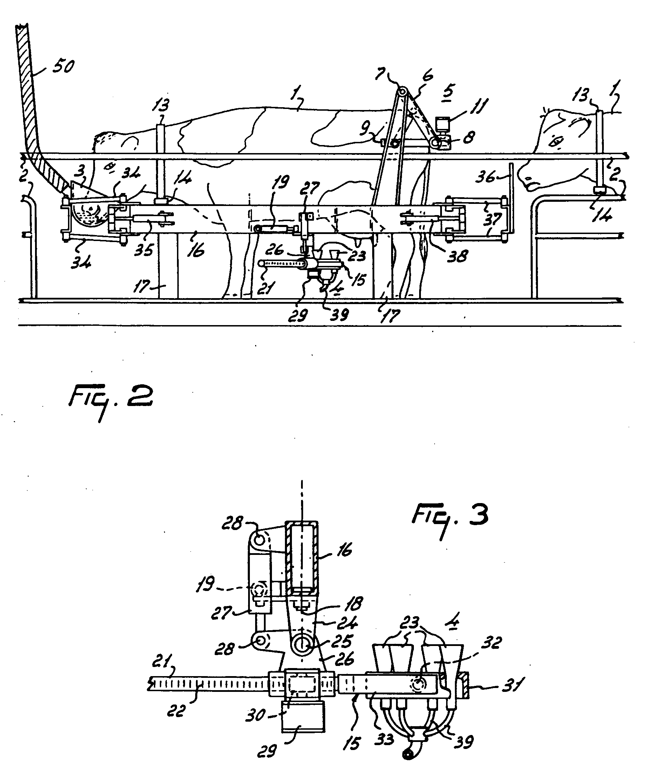

Figure 1 shows in a plan view a cow 1, stationed in the milking parlour. The milking parlour is bounded on both sides by guide rails 2, between which the animal can walk forwards until its head reaches the manger 3; the animal 1 will stop then. To enable correct positioning of the milking cluster 4 the position of the animal must be determined. A mechanism 5 is provided for this purpose, which comprises a swivel arm 6 which is capable of hinging around a substantially horizontal pin 7, and whose other end is provided with a rod 8 fastened to the swivel arm at a substantially square angle. The rod 8 has a movable sensor 9 which can be moved along the rod 8 until it comes to bear on the animal (as is shown in Figure 1). In the embodiments shown in the Figures 1 and 2, the rod 8 is provided with a toothed rack 10, whilst sensor 9 includes an electric motor 11. Thus, the sensor 9 is moved along the rod 8 until the sensor touches the animal 1, means, not further shown, being present for switching off the electric motor 11 when sensor 9 experiences a slight resistance during its travel. It will be obvious that using the sensor 9 the lateral position of the animal 1 can be determined. Prior to this determination, the rod 8 is rotated around a hinge pin 7, so that it bears against the posterior of the animal 1. The angular position then obtained for the swivel arm 6 determines the position of the cow in the forward direction. These data are conveyed to the computer 12, which is shown schematically in Figure 1. If it is furthermore known which cow is in the milking parlour, the computer can determine with an adequate degree of accuracy in what way the milking cluster 4 is to be attached.

To determine which animal is present in the milking parlour the animal carries identification means which, in the embodiments shown in the Figures 1 and 2, are constituted by an information carrier 14 fastened to a collar 13. This information carrier 14 is, for example, a small transmitter, whose signals can be picked up by a sensor connected to the computer and present in the milking parlour.

After it has been determined where the milking cluster 4 is to be connected, the milking cluster 4 can be moved to the relevant position with the aid of the support 15. For that purpose a frame 16 is provided which is fastened to the floor by means of legs 17. The support 15 is fastened capable of hinging, around the substantially vertical pin 18 to the frame 16; rotation around hinge pin 18 is effected by the adjusting device 19, for example a pneumatic or hydraulic cylinder unit. The support 15 includes a rod 21, having a toothed rack 22, with the aid of which the rod 21 can be moved in its longitudinal direction relative to the frame. Using these two displacement modes, swivelling around the vertical pin 18 and longitudinal movement of the rod 21, the milking cluster 4 can be adjusted to any desired position in a horizontal plane. Since the support 15 can also swivel around a substantially horizontal axis relative to the frame, adjustment of the milking cluster 4 in the vertical direction can be achieved. This last mode of adjustment is shown in detail in Figure 3.

Figure 3 shows the milking cluster 4 having four teat cups 23 which together are supported in the support 15. The hollow bar of the frame 16 is shown in a cross-sectional view. A support 24 is provided on this hollow bar 16, which support is capable of swivelling relative to the bar around the hinge pin 18, using an actuating device 19, which is only partly shown. The support 24 is connected to the support 15 by means of a substantially horizontal hinge pin 25, around which portion 26 of the support is swivable. This swivelling action is controlled by actuating device 27, which comprises, for example, a pneumatic or hydraulic cylinder and is connected by means of ball joints 28 to the frame 16 and also to portion 26 of the support. The portion 26 of the support 15 can consequently rotate around both the vertical pin 18 and the horizontal pin 25.

Additionally, Figure 3 shows the electric motor 29, for example a stepper motor, which has on its axle a pinion 30 which cooperates with the toothed rack 22 so as to move rod 21 in its longitudinal direction, causing the milking cluster 31 provided at the end of the rod 21 to be moved to under the animal. As can be seen from Figures 1 and 3, the milking cluster holder 31 is connected, capable of hinging around shaft 32, to the rod 21 through a fork 33, as a result of which the milking cluster holder remains at all times in a horizontal position. Using the described construction, the milking cluster can be adjusted to any desired position by means of an appropriate control of the adjusting devices 19 and 27, and the electric motor 29.

Figure 3 also shows the manner in which the teat cups 23 may be arranged in the milking cluster holder 31. The wider portion of the flaring teat cup 23 is supported in a recess of the milking cluster holder 31, so that the teat cups can freely move up, thus getting free from the milking cluster holder 31. Releasing the cups from the milking cluster holder can be effected after the milking cluster has been attached to the udder and the vacuum has been generated, causing the teat cups to remain attached to the teats, by moving the milking cluster holder downwards. As the tubes 39 connecting the teat cups 23 to the milking machine are adequately flexible, the teat cups 23, after having been lifted from the milking cluster holder 31, have a certain degree of freedom to follow the motions of the animal. After milking has been terminated the vacuum is terminated, which causes the teat cups 23 to fall automatically back into said recesses in the milking cluster holder.

With the object of luring the animal 1 to the milking parlour and/or during milking, a computer-controlled quantity of fodder, for example concentrate, can be conveyed through pipe 50 to the manger 3. By means of a rod system 34 and an adjusting device 35, the manger 3 can be moved to a position outside the milking parlour. Thus, the animal can leave the milking parlour in the forward direction after milking has been terminated.

As is shown in Figures 1 and 2, the next animal is already present between the guide rails 2, but at some distance from the milking parlour. This animal can move up to the milking parlour, lured there by the manger 3, after the mechanism 5 has been moved upwards around a hinge pin 7, and the partition 36 which is connected through the rod system 37 to the frame 16 has been moved to a position outside the guide rails by means of actuating device 38.

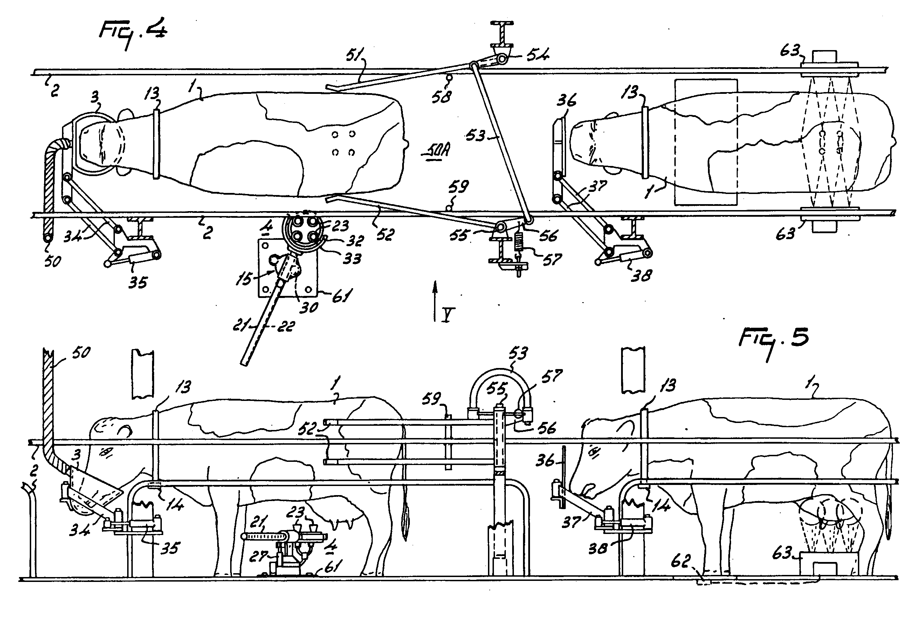

The Figures 4 and 5 show a second embodiment of the device for milking an animal. This device also includes guide rails 2 at both sides of the milking parlour, the guide rails extending beyond a washing station which the animal has to pass before it arrives in the milking parlour. As is also the case in the first embodiment, in this embodiment there is a manger 3 which, by means of a rod system 34 and an adjusting mechanism 35 can be moved to outside the area bounded by the guide rails 2. According to this embodiment the animal is moved in the appropriate position by means of two positioning means 51, 52, which bear on either side against the animal 1, if the animal is halfway between the guide rails 2. The positioning members 51, 52 are interconnected such by means of a connecting rod 53 that they can move symmetrically relative to the milking parlour. To that end positioning member 51 is hingeable around a vertical pin 54, whilst positioning member 52 is hingeable around a vertical pin 55. Positioning member 52 is rigidly connected to lever 56, to whose end the connecting rod 53 is connected capable of hinging, the connecting rod 53 being connected at its other end, capable of hinging, to positioning member 51. With the aid of tension spring 57, an inwardly directed force is exerted on the positioning members 51 and 52 and, in the absence of an animal in the milking parlour, the positioning members 51, 52 bear against the stops 58 and 59, respectively. It will be clear that the animal present between the positioning members 51 and 52, experiences, as long as it is in the centre of the milking parlour, a light force from both sides, but that, when the animal is not in the centre, one of the positioning members 51, 52 will exert a greater force on the animal so as to force it back to the central position. Outside the milking parlour there is provided a support 15 for the milking cluster 4, comprising a plate 61 attached to the floor on which plate means are provided for moving the milking cluster to any desired location in the same manner as described with reference to the first embodiment.

Also in the second embodiment the animal carries a collar 13 with an information carrier 14 provided thereon, so that the sensor means, which are not shown, can inform the computer which animal is in the milking parlour. Depending on this information, the desired quantity of fodder can then be fed to the manger 3 and it can be determined to which position the milking cluster 4 is to be moved for correct attachment to the udder of the animal.

In the second embodiment the implement includes a washing station where the udders of the animal can be cleaned, rinsed, disinfected and/or dried, depending on the requirements, before the animal goes to the milking parlour. This washing operation can already be effected during milking of the preceding animal. To that end means are provided, for example a sensor 62, which detect the presence of said animal in the washing station. The animal is then in front of the partition 36 which is movable by means of rod system 37 from a position outside the guide rails 2 to a position between these guide rails. This partition 36 may also be provided with a manger so as to lure the animal in the appropriate position in the washing station. The washing station comprises a plurality of nozzles 63 which can spray the desired liquid, for example warm water, against the udder. Furthermore, drying can be performed by means of warm air blown against the udder.

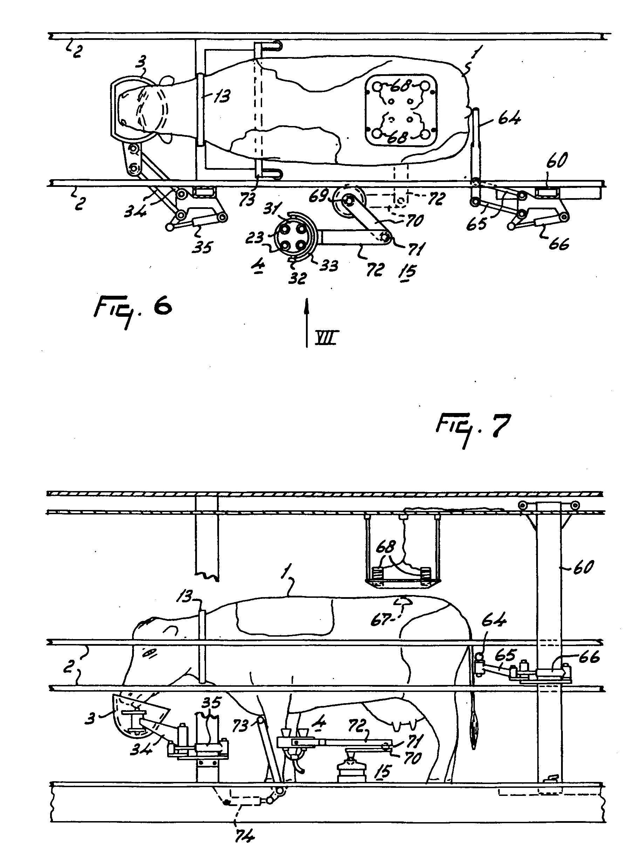

In the embodiment of Figures 6 and 7, the milking parlour is also bounded by guide rails 2 between which the animal 1 is present. In this position the animal can take the fodder in the aforedescribed manner from the manger 3, which manger 3 can be moved to outside the guide rail-bounded area by means of rod system 34 and actuating mechanism 35. At the rear the milking parlour is bounded by a member 64 which can be moved by means of the rod system 65 and the actuating device 66 to outside the area bounded by the guide rails 2. In the embodiment shown, the mechanism 64, 65, 66 is mounted on a beam 60 which is movable in the longitudinal direction relative to the milking parlour, so that the position of the bounding member 64 can be set in dependence on the length of the animal. It will be obvious that the animal present in the milking parlour has a limited freedom of movement. So as to enable determination of the position of the udder, the animal is provided with marking means 67, for example a metal plate, which is connected to the animal's back. Detection means 68 are arranged over the animal, with which the position of the marking means can be determined electronically, which position is conveyed to the computer. In combination with the data of the animal the computer can calculate the position of the udder, whereafter the support of the milking cluster 4 can be actuated so that the milking cluster can be connected to the udder in the correct way.

In the embodiments shown in the Figures 6 and 7, the support comprises an arm 70 which is capable of rotation around a fixed, vertical pin 69. Arm 70 is connected to a second arm 72, but capable of swivelling around vertical pin 71. Arm 72 carries the milking cluster holder 31 at its end. The support can be adjusted for height by means of an electric motor in the region of hinge pin 69 and further positioning is effected by rotation around the pins 69 and 71.

The Figures 6 and 7 also show a stop 73 against which the animal can bear through the upper part of its forelegs. The stop 73 can be hinged downwards, into the floor, by means of actuating device 74, whilst, depending on the relevant animal, the stop 73 can be adjusted to a predetermined position, to render it possible for the animal to eat in a comfortable position whilst yet still bearing against the stop 73.

## Claims

1. Device for automatically milking animals, such as cows, comprising guide means positioned near the animal, detection means for determining the position of the animal or the position of specific parts of the animal, such as the udder of the animal, a robot with a holder for carrying a teat cup and attaching said teat cup to the udder of the animal, and a milking machine, whereby the robot is activated by the same pneumatic means as used in the milking machine for milking, characterized in that the holder (31) is appropriate to carry a milking cluster provided with a plurality of teat cups and in that the robot comprises means for moving the milking cluster holder (31) in a somewhat downward direction, after the milking cluster (4) has been attached and the pneumatic means has produced the vacuum in the teat cups (23) and for holding the milking cluster holder (31) during milking in a position below the teats, the milking cluster holder (31) furthermore being provided with recesses through which somewhat flexible tubes, by means of which the teat cups (23) are connected to the milking machine, pass in such a way that after milking, when the vacuum in the teat cups (23) is terminated, the teat cups (23) fall back into the recesses in the milking cluster holder (31).

2. Device as claimed in any one of the preceding claims, characterized in that the robot comprises means for placing the milking cluster (4), when it is not connected to the teats, in a substantially upside down position wherein the open ends of the teat cups (23) face down.

3. Device as claimed in claim 2, characterized in that a spraying unit is provided for spraying a cleaning liquid against the teat cups (23), whereafter superfluous liquid can leak from the cups (23).

## Patentansprüche

1. Vorrichtung zum automatischen Melken von Tieren, wie zum Beispiel Kühen, mit einer in der Nähe des Tieres angeordneten Leitvorrichtung, mit einer Erkennungseinrichtung zur Bestimmung der Position des Tieres oder der Lage bestimmter Teile des Tieres, insbesondere des Euters des Tieres, einem Roboter mit einem Halter zum Halten eines Zitzenbechers und zum Anlegen des Zitzenbechers an das Euter des Tieres, und mit einer Melkmaschine, wobei der Roboter von derselben pneumatischen Vorrichtung aktiviert wird, die in der Melkmaschine zum Melken benutzt wird,
dadurch gekennzeichnet, daß der Halter (31) zum Tragen eines Melkgeschirres mit mehreren Zitzenbechern eingerichtet ist, und daß der Roboter eine Vorrichtung aufweist, die dazu dient, den Melkgeschirr-Halter (31) in Richtung etwas nach unten zu bewegen, nachdem das Melkgeschirr (4) angebracht worden ist und die pneumatische Vorrichtung ein Vakuum in den Zitzenbechern (23) erzeugt hat, und mittels der der Melkgeschirr-Halter (31) während des Melkens in einer Position unterhalb der Zitzen gehalten wird, und daß der Melkgeschirr-Halter (31) weiterhin Aussparungen aufweist, durch welche einigermaßen biegsame Schläuche, mit denen die Zitzenbecher (23) an die Melkmaschine angeschlossen sind, derart hindurchgeführt sind, daß die Zitzenbecher (23) nach dem Melken, wenn das Vakuum in den Zitzenbechern (23) aufgehoben ist, in die Aussparungen im Melkgeschirr-Halter (31) zurückfallen.

2. Vorrichtung nach einem der vorhergehenden Ansprüche,
dadurch gekennzeichnet, daß der Roboter eine Vorrichtung zum Anordnen des an die Zitzen angelegten Melkgeschirres (4) in umgekehrter Lage aufweist, in der die offenen Enden der Zitzenbecher (23), wenn das Melkgeschirr nicht mit den Zitzen verbunden ist, nach unten gerichtet sind.

3. Vorrichtung nach Anspruch 2,
dadurch gekennzeichnet, daß eine Sprühvorrichtung zum Besprühen der Zitzenbecher (23) mit einer Reinigungsflüssigkeit vorgesehen ist, wobei überschüssige Flüssigkeit von den Bechern (23) abtropfen kann.

## Revendications

1. Dispositif pour traire automatiquement des animaux, tels que des vaches, comprenant des moyens de guidage positionnés près de l'animal, des moyens de détection pour déterminer la position de l'animal ou la postion de parties spécifiques de l'animal, telles que la mamelle de l'animal, un robot avec un support pour porter un godet de trayon et pour attacher ledit godet de trayon au pis de l'animal, et une machine à traire, dans lequel le robot est actionné par le même moyen pneumatique tel qu'utilisé dans la machine à traire pour la traite,
**caractérisé** en ce que le support (31) est approprié pour porter un groupe de traite muni d'une pluralité de godets de trayons, et en ce que le robot comprend des moyens pour mouvoir le support (31) du groupe de traite dans une direction allant un peu vers le bas après que le groupe de traite (4) a été attaché et que le moyen pneumatique a produit le vide dans les godets de trayons (23) et pour maintenir le support (31) du groupe de traite pendant la traite en une position sous les trayons, le support (31) du groupe de traite étant en outre muni de logements à travers lesquels des tubes assez flexibles, au moyen desquels les godets de trayons (23) sont reliés à la machine à traire, passent de telle manière qu'après la traite, quand le vide dans les godets de trayons (23) est interrompu, les godets de trayons (23) retombent dans les logements dans le support (31) du groupe de traite.

2. Dispositif selon la revendication 1, caractérisé en ce que le robot comprend des moyens pour placer le groupe de traite (4), quand il n'est pas relié aux trayons, dans une position pratiquement renversée dans laquelle les extrémités ouvertes des godets de trayons (23) font face vers le bas.

3. Dispositif selon la revendication 2, caractérisé en ce qu'une unité pulvérisatrice est prévue pour pulvériser un liquide de nettoyage contre les godets de trayons (23), après quoi le liquide superflu peut s'échapper des godets (23).
